# DEMANDE DE BREVET EUROPEEN

(11) **EP 0 889 278 A1**
(43) Date de publication de la demande: **07.01.1999**
(21) Numéro de dépôt: 97440054.1
(22) Date de dépôt: 02.07.1997
(51) Int. Cl.: F16M 13/02, B25B 1/24

(54) **Dispositif de fixation d'un objet sur le bord d'un support plan, notamment d'un outil du type étau ou analogue sur un établi**

(71) Demandeur: VIRAX S.A., F-51206 Epernay Cédex (FR)
(72) Inventeur: Churoux, Patrice, 51480 Venteuil (FR)
(74) Mandataire: Arbousse-Bastide, Jean-Claude Philippe

(57) **Abrégé**

Dispositif de fixation d'un objet sur le bord d'un support plan, notamment d'un outil du type étau ou analogue sur un établi.

Il comporte un profilé (1) destiné à être positionné à proximité du bord du support sur lequel l'objet (5) doit être fixé et perpendiculairement au plan du support, dont l'extrémité supérieure comporte un moyen (2, 20) permettant sa solidarisation audit objet, et qui est introduit, avec possibilité de coulissement, dans une ouverture (30) pratiquée dans l'extrémité (31) d'un bras (3) s'étendant perpendiculairement au profilé (1), parallèlement et en regard de la face inférieure du support, et dont l'autre extrémité (32) comporte une came (33) dont le pivotement, sous l'action d'un levier, permet d'appliquer le bossage (35) de celle-ci contre ladite face inférieure.

## Description

La présente invention a pour objet un dispositif de fixation d'un objet en bordure d'un support plan, notamment d'un outil du type étau ou analogue sur un établi.

Les outils du type étau sont traditionnellement solidarisés sur un support plan soit fixement, soit de manière amovible.

Dans le premier cas l'outil est solidarisé par vissage directement sur l'établi, éventuellement par l'intermédiaire d'une platine permettant la rotation de l'outil, ce dispositif est plus particulièrement réservé aux outils de grandes dimensions et aux installations fixes, dans un atelier par exemple.

Dans le second cas, l'outil comporte inférieurement une bride destinée à enserrer le bord de l'établi contre la face inférieure duquel est serrée une vis.

Ce dispositif est plus particulièrement réservé aux chantiers mobiles, notamment lorsque l'établi est de dimensions réduites, ce qui ne permet pas que l'étau reste à demeure sur celui-ci.

Ce dispositif présente l'inconvénient de ne pas permettre une fixation immédiate de l'outil, c'est-à-dire qu'il est nécessaire pour l'enlever de desserrer la vis de la bride, puis d'adapter l'ouverture de celle-ci à l'épaisseur du support, puis de serrer la vis, avec parfois le risque d'endommager la face inférieure dudit support.

Or il est parfois nécessaire, soit de modifier l'emplacement de l'outil sur l'établi, soit d'enlever l'outil pour le remplacer par un autre, adapté à un travail différent.

La présente invention a pour but de remédier à cet inconvénient en proposant un dispositif de fixation d'un objet en bordure d'un support plan, permettant une solidarisation rapide et immédiate.

Le dispositif objet de la présente invention se caractérise essentiellement en ce qu'il comporte un profilé destiné à être positionné à proximité du bord du support sur lequel l'objet doit être fixé et perpendiculairement au plan dudit support, dont l'extrémité supérieure comporte un moyen permettant sa solidarisation audit objet, et qui est introduit, avec possibilité de coulissement, dans une ouverture pratiquée dans l'extrémité d'un bras s'étendant perpendiculairement audit profilé, parallèlement et en regard de la face inférieure dudit support, et dont l'autre extrémité comporte une came dont le pivotement, sous l'action d'un levier, permet d'appliquer le bossage de celle-ci contre ladite face inférieure.

Selon une caractéristique additionnelle du dispositif selon l'invention le moyen de solidarisation de l'objet consiste en au moins une pièce s'étendant perpendiculairement au profilé, et destinée à être engagée étroitement dans une empreinte de forme complémentaire pratiquée dans ledit objet, ou à recouvrir une partie dudit objet.

Selon une autre caractéristique additionnelle du dispositif selon l'invention, le bras est rappelé élastiquement en direction de l'extrémité supérieure du profilé.

Selon une autre caractéristique additionnelle du dispositif selon l'invention, une pièce en forme d'étrier est disposée à cheval sur la came et maintenue par l'axe de pivotement de celle-ci avec possibilité de translation radiale par rapport audit axe, perpendiculairement au bras, elle présente une partie plane tangente à ladite came, dont la face externe est destinée à venir au contact de la face inférieure du support.

Les avantages et les caractéristiques de la présente invention ressortiront plus clairement de la description qui suit et qui se rapporte au dessin annexé, lequel en représente un mode de réalisation non limitatif.

Dans le dessin annexé :
- la figure 1 représente une vue en perspective du dispositif de fixation selon l'invention.
- la figure 2 représente une vue en coupe selon un plan vertical médian du même dispositif, en cours de fixation d'un objet.
- la figure 3 représente la même vue lorsque l'objet est fixé.
- la figure 4 représente une vue en perspective d'un élément d'une variante du même dispositif.

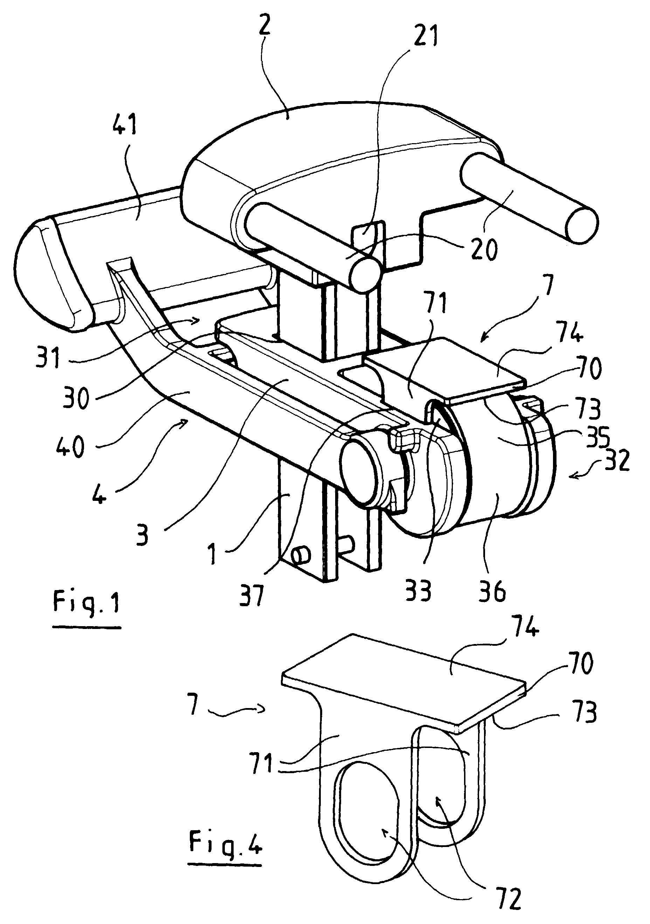

Si on se réfère a la figure 1 on peut voir qu'un dispositif de fixation d'un outil sur un support plan comporte un profilé 1 de section en U, positionné verticalement, à l'extrémité supérieure duquel est solidarisé un corps 2 duquel font saillie, perpendiculairement au profil 1, deux tiges parallèles 20.

Le profilé 1 est monté coulissant dans une ouverture 30 pratiquée dans l'extrémité 31 d'un bras 3 disposé perpendiculairement au profilé 1 en regard des tiges 20.

L'autre extrémité 32 du bras 3 comporte une came 33 manoeuvrable en pivotement par l'intermédiaire d'un levier 4 comprenant deux branches 40 passant de part et d'autre du bras 3 et dont les extrémités, opposées à celles liées à la came 33, sont solidaires d'une poignée 41.

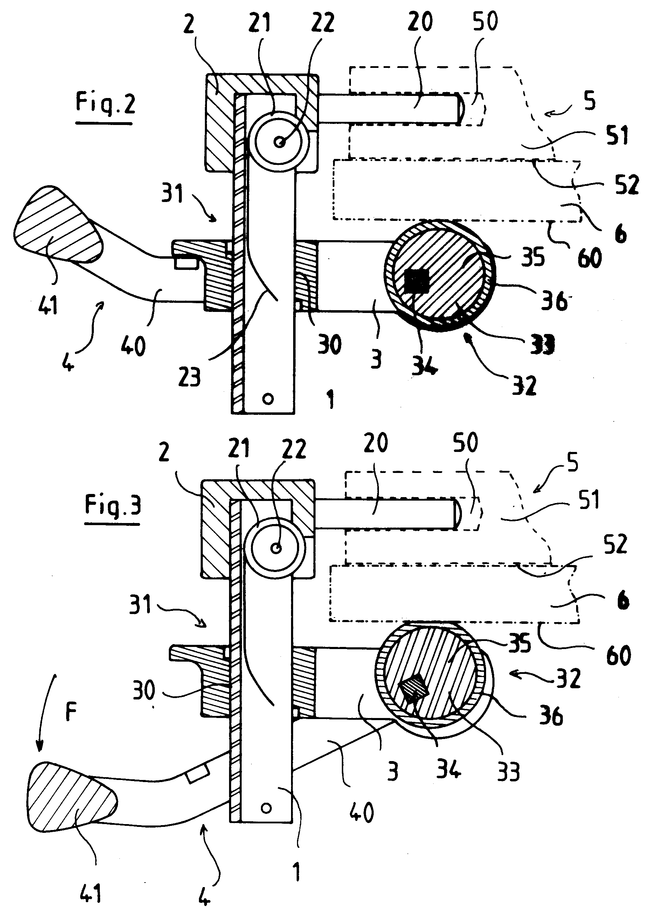

Si on se réfère également à la figure 2, on peut voir que la came 33 est liée au levier 4 par l'intermédiaire d'un carré 34, lequel est monté dans des moyeux, non visibles sur la figure, tourillonnant dans le levier 4.

Le bras 3 est rappelé élastiquement en direction du corps 2 par l'intermédiaire d'un ressort en spiral 21 logé dans le corps 2 à l'intérieur du profilé 1, monté sur un axe 22, et dont l'extrémité 23 est solidarisée au bras 3 à l'intérieur de l'ouverture 30 par un moyen approprié, non représenté.

Le dispositif selon l'invention s'utilise de la manière suivante, les tiges parallèles 20 sont introduites dans des canaux 50 pratiqués dans le socle 51 de l'outil 5 qui repose par sa face inférieure 52 sur un support plan 6, tandis que le bras 3 est engagé sous ce dernier.

Sous l'effet du ressort 21 le bras 3 remonte sur le profilé 1 et la came 33 vient au contact de la face inférieure 60 du support plan 6, ou à proximité de celle-ci.

Si on se réfère maintenant à la figure 3 on peut voir que l'abaissement du levier 4, dans le sens de la flèche F, provoque le pivotement de la came 33 dont le bossage 35 prend appui sur la face inférieure 60 du support plan 6, en sorte que l'extrémité 32 du bras 3 s'éloigne de celle-ci tandis que son extrémité 31 s'arc-boute sur le profilé 1 permettant ainsi de réaliser le blocage du bras 3 sur le profilé 1 et donc le pincement de l'outil 5 et du support plan 6.

On notera que la came 33 est garnie périphériquement d'un rouleau 36 susceptible de tourner librement sur la came 33, permettant de stabiliser la position de celle-ci lors de l'opération de serrage.

Si on se réfère maintenant à la figure 4, on peut voir une pièce 7 comprenant une partie médiane plate 70 et deux pattes 71 parallèles, perpendiculaires à la partie 70, dans chacune desquelles est pratiqué un trou oblong 72.

Cette pièce 7 est destinée, comme cela est représenté sur la figure 1, à être positionnée à cheval sur la came 33, dont l'axe de pivotement, non visible, traverse les trous 72, tandis que les pattes 71 prennent place dans des gorges 37 pratiquées dans le bras 3, de manière à permettre une translation radiale audit axe.

Lors du manoeuvrement du levier 4, la came prend appui contre la face inférieure 73 de la partie 70, tandis que la face supérieure 74 de celle-ci est appliquée contre la face inférieure 60 du support plan 6, ce qui permet une meilleure répartition des efforts.

On notera qu'avantageusement, la face supérieure 74 de la partie 70 peut être revêtue d'une matière antidérapante.

Selon une variante du dispositif selon l'invention, les tiges 20 sont remplacées par une ou plusieurs mâchoires destinées à recouvrir une partie de l'objet à fixer sur le support plan.

Le dispositif selon l'invention est destiné essentiellement à la fixation d'outils du type étau ou analogue sur un établi, toutefois il peut également être utilisé pour la fixation d'autres outils tels que des outils de coupe par exemple, ou bien pour la fixation d'objets en étant utilisé comme serre-joint.

## Revendications

1. Dispositif de fixation d'un objet sur le bord d'un support plan, notamment d'un outil du type étau ou analogue sur un établi, caractérisé en ce qu'il comporte un profilé (1) destiné à être positionné à proximité du bord du support (6) sur lequel l'objet (5) doit être fixé et perpendiculairement au plan dudit support (6), dont l'extrémité supérieure comporte un moyen (2, 20) permettant sa solidarisation audit objet (5), et qui est introduit, avec possibilité de coulissement, dans une ouverture (30) pratiquée dans l'extrémité (31) d'un bras (3) s'étendant perpendiculairement audit profilé (1), parallèlement et en regard de la face inférieure (60) dudit support (6), et dont l'autre extrémité (32) comporte une came (33) dont le pivotement, sous l'action d'un levier, permet d'appliquer le bossage (35) de celle-ci contre ladite face inférieure (60).

2. Dispositif selon la revendication 1 caractérisé en ce que le moyen de fixation à l'objet consiste en au moins une pièce (20) s'étendant perpendiculairement au profilé (1), et destinée à être engagée étroitement dans une empreinte (50) de forme complémentaire pratiquée dans ledit objet (5).

3. Dispositif selon la revendication 1 caractérisé en ce que le moyen de fixation à l'objet (5) consiste en au moins une mâchoire destinée à venir pincer ledit objet (5) par le dessus.

4. Dispositif selon l'une quelconque des revendications précédentes caractérisé en ce que le bras (3) est rappelé élastiquement en direction de l'extrémité supérieure du profilé (1).

5. Dispositif selon la revendication 4 caractérisé en ce que le bras (3) est rappelé par un ressort en spirale (21) logé dans l'extrémité supérieure du profilé (1) monté sur un axe (22), et dont l'extrémité (23) est solidarisée au bras (3) à l'intérieur de l'ouverture (30) de passage dudit profilé (1).

6. Dispositif selon l'une quelconque des revendications précédentes caractérisé en ce la came (33) est garnie périphériquement d'un rouleau (36) susceptible de tourner librement sur ladite came (33).

7. Dispositif selon l'une quelconque des revendications précédentes caractérisé en ce qu'une pièce (7) en forme d'étrier est disposée à cheval sur la came (33) et maintenue par l'axe de pivotement de celle-ci avec possibilité de translation radiale par rapport audit axe, perpendiculairement au bras (3), elle présente une partie plane (70) destinée à venir en appui par sa face extérieure (74) contre la face inférieure (60) du support (6), sous l'action de ladite came (33).

8. Dispositif selon la revendication 7 caractérisé en ce que la face supérieure (74) de la partie plane (70) de la pièce (7) en forme d'étrier est garnie d'une matière antidérapante.
